# EUROPEAN PATENT SPECIFICATION

(11) **EP 3 013 895 B1**
(45) Date of publication and mention of the grant of the patent: **06.12.2017**
(21) Application number: 14735786.7
(22) Date of filing: 10.06.2014
(51) Int. Cl.: C08K 5/00, C08K 5/5313, C08K 5/3492

(54) **FLAME-RETARDANT POLYMER COMPOSITIONS**
FLAMMHEMMENDE POLYMERZUSAMMENSETZUNGEN
COMPOSITIONS DE POLYMÈRES IGNIFUGES

(30) Priority: 28.06.2013 CN 201310270062
(43) Date of publication of application: 04.05.2016
(73) Proprietor: E. I. du Pont de Nemours and Company, Wilmington, DE 19805 (US)
(72) Inventor: HU, Xiaobo, Xinyu Jiangxi 338025 (CN); YU, Ting, Shanghai (CN)
(74) Representative: Dannenberger, Oliver Andre
(86) International application number: PCT/US2014/041615
(87) International publication number: WO 2014/209590

(56) References cited:
- EP-A1- 2 025 710
- DE-A1-102010 018 680
- US-A1- 2013 131 235

## Description

### TECHNICAL FIELD

The disclosure is related to flame-retardant polymer compositions comprising a mixture of metal salts of phosphinic acid.

### BACKGROUND

Thermoplastic polymers such as polyester or polyamide possess excellent mechanical properties, moldability, and chemical resistance and have therefore been used in automotive parts, electric/electronic components, and many other applications. In certain applications, it is desirable that these polymers also are flame-retardant. This can be achieved by the incorporation of various types of additives. Typically, halogenated organic compounds, such as brominated polystyrene, along with an antimony compound may be used. However, during the last twenty years or so, halogenated flame retardants have come under scrutiny due to environmental concerns.

Phosphorus-containing products are one type of halogen-free flame retardants that have been used in the art. For example, U.S. Patent No.5,773,556 discloses the use of phosphinate or diphosphinate as flame retardants in polyamides; U.S. Patent No. 6,255,371 discloses the use of phosphinate or diphosphinate in combination with melamine derivatives in polyamides or polyesters. However, there is still need to develop a halogen-free flame retardant system that is more effective than the ones currently available in the art.

### SUMMARY

The purpose of the present disclosure is to provide a polymer composition with improved flame-retardant properties. The flame-retardant polymer composition comprises (a) at least one polymer, (b) 10-30 wt% of a mixture of metal salts of phosphinic acid, and (c) 1-20% of at least one nitrogen-containing compound, with the total wt% of all components comprised in the flame-retardant polymer composition totaling to 100 wt%,
wherein, the mixture of metal salts of phosphinic acid consists essentially of a first metal salt of phosphinic acid having a Formula (I) and a second metal salt of phosphinic acid having a Formula (II) with a weight ratio of 3:1-1:3, 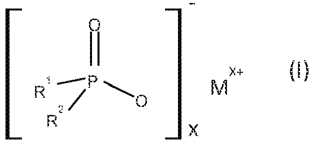 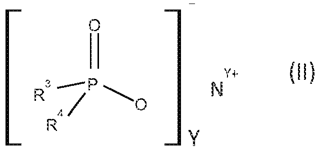 and wherein, each of R¹ and R² is independently selected from the group consisting of linear C₁-C₆ alkyl groups; each of R³ and R⁴ is independently selected from the group consisting of branched C₃-C₆ alkyl groups; each of M and N is independently selected from the group consisting of magnesium ions, calcium ions, aluminum ions, zinc ions, antimony ions, tin ions, germanium ions, titanium ions, iron ions, zirconium, cerium ions, bismuth ions, strontium ions, manganese ions, lithium ions, sodium ions, potassium ions, and protonated nitrogen bases; and each of x and y is independently an integer from 1 to 4.

In one embodiment of the flame-retardant polymer composition, the first metal salt of phosphinic acid is selected from aluminium methylethylphosphinate and aluminium diethylphosphinate, or the first metal salt of phosphinic acid is aluminium diethylphosphinate.

In a further embodiment of the flame-retardant polymer composition, the second metal salt of phosphinic acid is selected from the group consisting of aluminium isopropylisobutylphosphinate, aluminium isopropyltertbutylphosphinate, and aluminum diisobutylphosphinate, or the second metal salt of phosphinic acid is aluminium diisobutylphosphinate.

In a yet further embodiment of the flame-retardant polymer composition, the mixture of metal salts of phosphinic acid is present in the composition at a level of 10-25 wt% or 12-18 wt%, based on the total weight of the composition.

In a yet further embodiment of the flame-retardant polymer composition, the weight ratio between the first metal salt of phosphinic acid and the second metal salt of phosphinic acid is 2.5:1-1:2.5.

In a yet further embodiment of the flame-retardant polymer composition, the at least one polymer is selected from the group consisting of polyamides, polyesters, polyolefins, polystyrenes, polyphenylene ethers, polycarbonates, acrylonitrile-butadiene-styrene terpolymers, and combinations or blends of two or more thereof, or the at least one polymer is selected from the group consisting of polyamides and polyesters, or the at least one polymer is selected from polyamides.

In a yet further embodiment of the flame-retardant polymer composition, the at least one polymer is present in the composition at a level of 20-89 wt%, or 30-80 wt%, or 30-70 wt%.

In a yet further embodiment of the flame-retardant polymer composition, the at least one nitrogen-containing compound is selected from the group consisting of melamine cyanurate; condensation products of melamine; reaction products of phosphoric acid with melamine; reaction products of phosphoric acid with condensation products of melamine; and combinations of two or more thereof, or the at least one nitrogen-containing compound is melamine polyphosphate.

In a yet further embodiment of the flame-retardant polymer composition, the at least one nitrogen-containing compound is present in the composition at a level of 3-15 wt% or 5-12 wt%, based on the total weight of the composition.

In a yet further embodiment of the flame-retardant polymer composition, the composition further comprises up to 60 wt% or 5-50 wt% of reinforcing agents, based on the total weight of the composition.

In a yet further embodiment of the flame-retardant polymer composition, wherein the reinforcing agents are selected from the group consisting of glass fibers, glass flakes, kaolin, clay, talc, wollastonite, calcium carbonate, silica, carbon fibers, potassium titanate, and combinations of two or more thereof, or the reinforcing agents are selected from glass fibers.

Further provided herein is an article formed of the flame-retardant composition provided above.

In one embodiment, the article is a molded article.

### DESCRIPTION

Disclosed herein are flame-retardant polymer compositions that comprise: (a) at least one polymer, (b) about 10-30 wt% of a mixture of metal salts of phosphinic acid, and (c) about 1-20 wt% of at least one nitrogen-containing compound, with the total wt% of all components comprised in the flame-retardant polymer composition totaling to 100 wt%. The mixture of metal salts of phosphinic acid consists essentially of a first metal salt of phosphinic acid having a Formula (I) and a second metal salt of phosphinic acid having a Formula (II) with a weight ratio of about 3:1 to about 1:3, 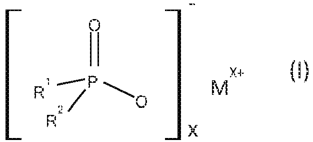 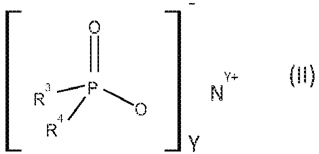 wherein, each of R¹ and R² is independently selected from the group consisting of linear C₁-C₆ alkyl groups; each of R³ and R⁴ is independently selected from the group consisting of branched C₃-C₆ alkyl groups; each of M and N is independently selected from the group consisting of magnesium ions, calcium ions, aluminum ions, zinc ions, antimony ions, tin ions, germanium ions, titanium ions, iron ions, zirconium, cerium ions, bismuth ions, strontium ions, manganese ions, lithium ions, sodium ions, potassium ions, and protonated nitrogen bases; and each of x and y is independently an integer from 1 to 4.

The polymers used herein may be any suitable polymeric material. The polymers suitable herein may include, without limitation, polyamides, polyesters, polyolefins (such as polypropylenes, polyisobutylenes, or polyethylenes), polystyrenes (such as high-impact polystyrenes (HIPS)), polyphenylene ethers (PPE), polycarbonates (PC), acrylonitrile-butadiene-styrene terpolymers (ABS), PC/ABS blends, PPE/HIPS blends, and combinations of two or more thereof. In one embodiment, the polymer used herein is selected from polyamides and polyesters. In a further embodiment, the polymer used herein is selected from polyamides.

In accordance with the present disclosure, suitable polyesters include, without limitation, polyethylene terephthalate (PET), polybutylene terephtalate (PBT), polytrimethylene terephthalate (PTT), polycyclohexylene dimethylene terephthalate (PCT), polyester elastomers (such as copolyetherester). The polyesters used herein may also be obtained commercially from various vendors. For example, suitable PET may be obtained commercially from E.I. du Pont de Nemours and Company (U.S.A.) (hereafter "DuPont") under the trade name Rynite®; suitable PBT may be obtained commercially from DuPont under the trade name Crastin®; suitable PTT may be obtained commercially from DuPont under the trade name Sorona®; suitable PCT may be obtained commercially from Ticona, The Netherland under the trade name Thermx™; and suitable copolyetheresters may be obtained commercially from DuPont under the trade name Hytrel®.

In accordance with the present disclosure, suitable polyamides include both aliphatic polyamides and aromatic polyamides.

Polyamides are (a) condensation products of one or more dicarboxylic acids and one or more diamines, or (b) condensation products of one or more aminocarboxylic acids, or (c) ring opening polymerization products of one or more cyclic lactams. The aromatic polyamides used herein may be homopolymers, copolymers, terpolymers or higher polymers containing at least one aromatic monomer component. For example, an aromatic polyamide may be obtained by using an aliphatic dicarboxylic acid and an aromatic diamine, or an aromatic dicarboxylic acid and an aliphatic diamine as starting materials and subjecting them to polycondensation.

Suitable diamines used herein may be selected from aliphatic diamines, alicyclic diamines, and aromatic diamines. Exemplary diamines useful herein include, without limitation, tetramethylenediamine; hexamethylenediamine; 2-methylpentamethylenediamine; 1,5-pentamethylenediamine; nonamethylenediamine; undecamethylenediamine; dodeca-methylenediamine; 2,2,4-trimethylhexamethylenediamine; 2,4,4 trimethylhexamethylenediamine; 5-methylnonamethylene-diamine; 1,3- bis(aminomethyl)cyclohexane; 1,4-bis(aminomethyl)cyclohexane; 1-amino-3 aminomethyl-3,5,5-trimethylcyclohexane; bis(4-aminocyclohexyl)methane; bis(3-methyl-4-aminocyclohexyl)methane; 2,2-bis(4-aminocyclohexyl)propane; bis(aminopropyl)piperazine; aminoethylpiperazine; bis(p-aminocyclohexyl)methane; 2-methyloctamethylenediamine; trimethylhexamethylenediamine; 1,8-diaminooctane; 1,9 diaminononane; 1,10-diaminodecane; 1,12-diaminododecane; m-xylylenediamine; p-xylylenediamine; and the like and derivatives thereof.

Suitable dicarboxylic acids used herein may be selected from aliphatic dicarboxylic acids, alicyclic dicarboxylic acids, and aromatic dicarboxylic acids. Exemplary dicarboxylic acids useful herein include, without limitation, adipic acid; sebacic acid; azelaic acid; dodecanedoic acid; terephthalic acid; isophthalic acid; phthalic acid; glutaric acid; pimelic acid; suberic acid; 1,4-cyclohexanedicarboxylic acid; naphthalenedicarboxylic acid; and the like and the like and derivatives thereof.

Exemplary aliphatic polyamides used herein include, without limitation, polyamide 6; polyamide 6,6; polyamide 4,6; polyamide 6,10; polyamide 6,12; polyamide 5,6; polyamide 5,10; polyamide 5,12; polyamide 11; polyamide 12; polyamide 9,10; polyamide 9,12; polyamide 9,13; polyamide 9,14; polyamide 9,15; polyamide 6,16; polyamide 9,36; polyamide 10,10; polyamide 10,12; polyamide 10,13; polyamide 10,14; polyamide 12,10; polyamide 12,12; polyamide 12,13; polyamide 12,14; polyamide 6,14; polyamide 6,13; polyamide 6,15; polyamide 6,16; polyamide 6,13; and the like.

Exemplary aromatic polyamides used herein include, without limitation, poly(m-xylylene adipamide) (polyamide MXD,6); poly(dodecamethylene terephthalamide) (polyamide 12,T); poly(hendecamethylene terephthalamide) (polyamide 11,T); poly(decamethylene terephthalamide) (polyamide 10,T); poly(nonamethylene terephthalamide) (polyamide 9,T); poly(hexamethylene terephthalamide) (polyamide 6,T); hexamethylene adipamide/hexamethylene terephthalamide copolyamide (polyamide 6,T/6,6, i.e., polyamide 6,T/6,6 having at least about 50 mol% of its repeating units derived from 6,T); hexamethylene terephthalamide/hexamethylene adipamide copolyamide (polyamide 6,6/6,T, i.e., polyamide 6,6/6,T having at least about 50 mol% of its repeating units derived from 6,6); poly(hexamethylene terephthalamide/hexamethylene isophthalamide) (polyamide 6,T/6,I, i.e., polyamide 6,T/6,I having at least about 50 mol% of its repeating units derived from 6,T); hexamethylene terephthalamide/2-methylpentamethylene terephthalamide copolyamide (polyamide 6,T/D,T); hexamethylene adipamide/hexamethylene terephthalamide/hexamethylene isophthalamide copolyamide (polyamide 6,6/6,T/6,I); poly(caprolactam-hexamethylene terephthalamide) (polyamide 6/6,T); poly(hexamethylene isophthalamide/hexamethylene terephthalamide) (polyamide 6,I/6,T, i.e., polyamide 6,I/6,T having at least about 50 mol% of its repeating units derived from 6,I); poly(hexamethylene isophthalamide) (polyamide 6,I); poly(metaxylylene isophthalamide/ hexamethylene isophthalamide) (polyamide MXD,I/6,I); poly(metaxylylene isophthalamide)/ metaxylylene terephthalamide/ hexamethylene isophthalamide) (polyamide MXD,I/MXD, T/6,I/6,T); poly(metaxylylene isophthalamide/dodecamethylene isophthalamide) (polyamide MXD, I/12,I); poly(metaxylylene isophthalamide) (polyamide MXD,I); poly(dimethyldiaminodicyclohexylmethane isophthalamide/dodecanamide) (polyamide MACM,I/12); poly(dimethyldiaminodicyclohexylmethane isophthalamide/dimethyldiaminodicyclohexylmethane terephthalamide/dodecanamide) (polyamide MACM,I/MACM,T/12); poly(hexamethylene isophthalamide/dimethyldiaminodicyclohexylmethane isophthalamide/dodecanamide) (polyamide 6,I/MACM,I/12); poly(hexamethylene isophthalamide/hexamethylene terephthalamide/ dimethyldiaminodicyclohexylmethane isophthalamid/ dimethyldiaminodicyclohexylmethane terephthalamide) (polyamide 6,I/6,T/MACM,I/MACM,T); poly(hexamethylene isophthalamide/hexamethylene terephthalamide/dimethyldiaminodicyclohexylmethane isophihalamid/ dimethyldiaminodicyclohexylmethane terephthalamide/dodecanamide) (polyamide 6,I/6,T/MACM,I/MACM,T/12); poly(dimethyldiaminodicyclohexylmethane isophthalamide/ dimethyldiaminodicyclohexylmethane dodecanamide) (polyamide MACM,I/MACM,12); and the like.

Based on the total weight of the flame-retardant polymer composition disclosed herein, the at least one polymer may be present at a level of about 20-89 wt%, or about 30-80 wt%, or about 30-70 wt%.

In accordance with the present disclosure, within the mixture of metal salts of phosphinic acid used herein, the weight ratio between the first metal salt of phosphinic acid of Formula (I) and the second metal salt of phosphinic acid of Formula (II) ranges from about 3:1 to about 1:3 or preferably from about 2.5:1 to about 1:2.5. Moreover, the metal salt of phosphinic acid of Formula (I) used herein may be selected from those wherein, R¹ and R² are independently selected from methyl, ethyl, n-propyl, n-butyl and n-hexyl; M is selected from aluminium ions and zinc ions. Preferably, the metal salt of phosphinic acid of Formula (I) used herein is selected from aluminium methylethylphosphinate and aluminium diethylphosphinate. More preferably, the metal salt of phosphinic acid of Formula (I) used herein is aluminium diethylphosphinate.

In one embodiment, the metal salt of phosphonic acid of Formula (I) is an aluminium diethylphosphinate having a Formula (III),

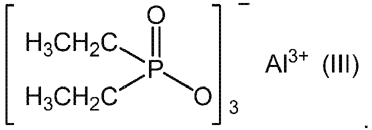

The metal salt of phosphinic acid of Formula (I) used herein also may be obtained commercially from Clariant (Switzerland) under the trade name Exolit® OP1230.

In addition, the metal salt of phosphinic acid of Formula (II) used herein may be selected from those wherein, R³, R⁴ are independently selected from isopropyl, isobutyl, tert-butyl, isopentyl, isohexyl, and the like; N is selected from aluminium ions and zinc ions. Preferably, the metal salt of phosphinic acid of Formula (II) used herein is selected from aluminium isopropylisobutylphosphinate, aluminium isopropyltertbutylphosphinate and aluminium diisobutylphosphinate. More preferably, the metal salt of phosphinic acid of Formula (II) used herein is aluminium diisobutylphosphinate.

In one embodiment, the metal salt of phosphinic acid of Formula (II) is an aluminum diisobutylphosphinate having a Formula (IV),

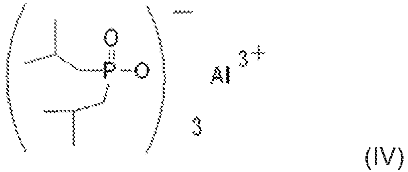

Methods for preparing the metal salt of phosphinic acid of Formula (II) are well known in the art. For example, the preparation methods may include, first, synthesizing a branched dialkylphosphinic acid in a free-radical addition reaction between an olefin or an alcohol and a hypophosphorous acid or salt in the presence of a catalyst (free-radical initiator), followed by reacting the branched dialkylphosphinic acid with a metal carbonate, a metal chloride, a metal hydroxide, or a metal oxide in an aqueous solution to form the metal salt of phosphinic acid of Formula (II) (see e.g., U.S. Patent Nos. 7,049,463 and 7,807,737). In one particular example, aluminum diisobutylphosphinate with Formula (IV) may be prepared as those disclosed in U.S. Patent No. 7,807,737 and "Synthesis, characterization and thermal degradation kinetics of aluminum diisobutylphosphinate", Shao et al., Thermochimica Acta 547 (2012) 70-75, which are incorporated herein by reference. More specifically, the reaction scheme of aluminum diisobutylphosphinate with Formula (IV) may be as follow:

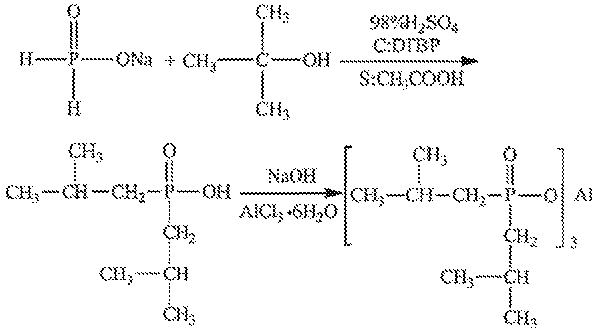

Also in accordance with the present disclosure, based on the total weight of the flame-retardant polymer composition, the mixture of metal salts of phosphinic acid may be present at a level of about 10-30 wt% or about 10-25 wt%, or about 12-18 wt%.

The nitrogen containing-compounds suitable for use in the flame-retardant polymer compositions disclosed herein may include, without limitation, those described, for example in U.S. Patent Nos. 6,365,071; and 7,255,814.

In one embodiment, the nitrogen-containing compounds used herein are selected from melamine, benzoguanamine, tris(hydroxyethyl)isocyanurate, allantoine, glycouril, dicyandiamide, guanidine and carbodiimide, and derivatives thereof.

In a further embodiment, the nitrogen-containing compounds used herein may be selected from melamine derivatives, which include, without limitation, (i) melamine cyanurate, (ii) condensation products of melamine, (iii) reaction products of phosphoric acid with melamine, and (iv) reaction products of phosphoric acid with condensation products of melamine. Suitable condensation products may include, without limitation, melem, melam and melon, as well as higher derivatives and mixtures thereof. Condensation products of melamine can be produced by any suitable methods (e.g., those described in PCT Patent Publication No. WO9616948). Reaction products of phosphoric acid with melamine or reaction products of phosphoric acid with condensation products of melamine are herein understood compounds, which result from the reaction of melamine with a phosphoric acid or the reaction of a condensation product of melamine (e.g., melem, melam, or melon) with a phosphoric acid. Examples include, without limitation, dimelamine phosphate, dimelamine pyrophosphate, melamine phosphate, melamine polyphosphate, melamine pyrophosphate, melam polyphosphate, melon polyphosphate, and melem polyphosphate, as are described, e.g., in PCT Patent Publication No. WO9839306.

In a yet further embodiment, the at least one nitrogen-containing compound comprised in the composition disclosed herein is a melamine polyphosphate.

Based on the total weight of the flame-retardant polymer composition disclosed herein, the at least one nitrogen-containing compound may be present at a level of about 1-20 wt%, or about 3-15 wt%, or about 5-12 wt%.

The flame-retardant polymer compositions disclosed herein may further comprise one or more inorganic reinforcing agents or fillers. Examples of inorganic reinforcing agents or fillers include, without limitation, glass fibers, glass flakes, kaolin, clay, talc, wollastonite, calcium carbonate, silica, carbon fibers, potassium titanate, and combinations of two or more thereof. In certain embodiments, glass fibers are included in the flame-retardant polymer compositions disclosed herein. The inorganic reinforcing agents or fillers may be present in the flame-retardant composition at a level of up to about 60 wt%, or about 5-50 wt%, based on the total weight of the composition.

Other suitable additives also may be included in the flame-retardant polymer compositions. Such other additives may include, without limitation, impact modifiers, plasticizers, ultraviolet light stabilizers, heat stabilizers, antioxidants, antistatic agents, nucleating agents, flow enhancers, processing aids, lubricants, colorants (including dyes, pigments, carbon black, and the like), and combinations of two or more thereof.

The flame-retardant polymer compositions disclosed herein may be prepared by melt-blending the components using any known methods. The component materials may be mixed to uniformity using a melt-mixer such as a single or twin-screw extruder, blender, kneader, Banbury mixer, etc. to give a resin composition. Or, part of the materials may be mixed in a melt-mixer, and the rest of the materials may then be added and further melt-mixed until uniform.

The flame-retardant polymer compositions disclosed herein may be formed into articles using any known melt-processing means such as injection molding, blow molding, extrusion, or thermoforming. Articles molded using injection molding are most preferred.

As demonstrated by the examples below, when mixtures of metal salts of phosphonic acid having a Formula (I) and metal salts of phosphonic acid having a Formula (II) are incorporated into a polymer (e.g., polyamide) composition, along with nitrogen-containing compounds, the flame-retardant properties of the composition is greatly improved, compared to those compositions in which the metal salts of phosphonic acid of Formula (I) and (II) are incorporated individually.

Further disclosed herein are articles formed of the reinforced polymer compositions disclosed herein. More particularly such articles include, without limitation, electrical or electronic parts, such as lamp holders, electrical coil skeletons, electric plug-in units, connectors, switches, laptop housings, etc.

### EXAMPLES

### Material:

- PA610: polyamide 6,10 obtained from DuPont Xingda Filaments Co., Ltd. (China);
- Antioxidant:
   N,N'-hexane-1,6-diylbis(3-(3,5-di-tert-butyl-4-hydroxyphenylpropionam ide)), an antioxidant obtained from BASF (Germany) under trade name Irganox™ 1098;
- MR (Mold Releaser): a vegetable-sourced secondary amide additive obtained from Croda International (United Kingdom) under trade name Crodamide™ 212;
- GF: glass fiber obtained from Chongqing Polycomp International Corp. (China) under the trade name ECS301 HP-3;
- MSP-1 (metal salt of phosphinic acid-1): an aluminum diethylphosphinate based halogen-free flame retardant obtained from Clariant under the trade name Exolit™ OP1230;
- Mop-2 (metal salt of phosphinic acid-2): an aluminum diisobutylphinate based halogen-free flame retardant prepared as follows: (a) charging 318 g sodium hypophosphite monohydrate and 637 g of acetic acid into a 3 L three-necked flask equipped with condenser, additional funnel, magnetic stirrer and thermometer; (b) slowly adding 149 g of 95% sulfuric acid into the mixture while substantial precipitation was observed; (c) adding a solution of 436 g of tert-butyl alcohol, 120 g of acetic acid, and 22.5 g of tert-butyl peroxide into the mixture at temperature of 100°C over the course of seventeen hours; (d) drying the mixture in a rotary evaporator under vacuum at 95°C to remove water and solvent, followed by washing three times with a 2.7% sodium carbonate aqueous solution; (e) separating the top oily phase from the rest followed by drying in a rotary evaporator under vacuum at 95°C; (f) collecting and crystallizing the oily materials at room temperature to obtain diisobutylphosphinic acid; (g) dissolving 136 g of the diisobutylphosphinic acid obtained in step (f) in a mixed solvent of water and acetonitrile; (h) gradually adding 13 g of an aqueous suspension of aluminum oxide into the diisobutylphosphinic acid solution obtained in step (g) while a substantial amount of white precipitants was observed; (i) filtering the precipitants obtained from step (h) followed by washing with acetonitrile and water and drying overnight in a vacuum oven at 120°C. The precipitants as such obtained were identified to be aluminium salt of diisobutylphosphinic acid;
- MPP (melamine polyphosphate): melamine polyphosphate obtained from BASF under the trade name Melapur™ 200/70.

### Comparative Examples CE1-CE4 and Examples E1-E2

In each of the Comparative Examples CE1-CE4 and Examples E1-E2, a polymer composition (all components listed in Table 1) was prepared by compounding in a 32 mm ZSK twin screw extruder. The barrel temperatures were set at about 250°C and screw speed at 400 rpm. After exiting the extruder, the blended compositions were cooled and cut into resin pellets.

Further, following ISO 527-1/2 standard, the composition in each of the examples was molded into 4-mm thick testing bars using an injection molding machine with a melting temperature set at 250°C and mold temperature at 80°C and the tensile modulus, tensile strength, and elongation at break measurements of the test bars were measured and the results are tabulated in Table 1.

Similarly, following UL-94, 0.8-mm thick test bars were molded for the composition in each of CE1-CE4 and E1-E2. The test bars were then conditioned at 23°C and 50% relative humidity for 48 hours before the UL-94 flammability rating thereof were measured and the results are tabulated in Table 1.

As demonstrated herein, by incorporating MSP-1 and MSP-2 (at a weight ratio of 2:1 or 8:7 (E1 and E2)), along with MPP, the UL94 rating of the polyamide composition was improved to V0, compared to those compositions in which MSP-1 and MSP-2 were added individually.

**TABLE 1**

| | CE1 | CE1 | E1 | E2 | CE3 | CE4 |
|---|---|---|---|---|---|---|
| Compositions | | | | | | |
| PA610 (wt%) | 46.5 | 46.5 | 46.5 | 46.5 | 46.5 | 46.5 |
| AO (wt%) | 0.3 | 0.3 | 0.3 | 0.3 | 0.3 | 0.3 |
| MR (wt%) | 0.2 | 0.2 | 0.2 | 0.2 | 0,2 | 0.2 |
| GF (wt%) | 30 | 30 | 30 | 30 | 30 | 30 |
| MSP-1 (wt%) | 15 | 12 | 10 | 8 | 3 | - |
| MSP-2 (wt%) | - | 3 | 5 | 7 | 12 | 15 |
| MPP (wt%) | 8 | 8 | 8 | 8 | 8 | 8 |

| Properties | | | | | | |
|---|---|---|---|---|---|---|
| Tensile Modulus (GPa) | 10.6 | 10.3 | 10.1 | 10.4 | 10.3 | 10.1 |
| Tensile Strength (MPa) | 132 | 130 | 123 | 131 | 132.7 | 133.2 |
| Elongation at Break (%) | 3 | 3.57 | 3.1 | 3.4 | 3.1 | 3.1 |
| UL94 rating (@0.8mm) | NVC | NVC | V0 | V0 | NVC | NVC |

## Claims

1. A flame-retardant polymer composition comprising (a) at least one polymer, (b) 10-30 wt% of a mixture of metal salts of phosphinic acid, and (c) 1-20% of at least one nitrogen-containing compound, with the total wt% of all components comprised in the flame-retardant polymer composition totaling to 100 wt%,
wherein, the mixture of metal salts of phosphinic acid consists essentially of a first metal salt of phosphinic acid having a Formula (I) and a second metal salt of phosphinic acid having a Formula (II) with a weight ratio of 3:1-1:3, 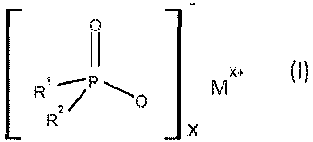 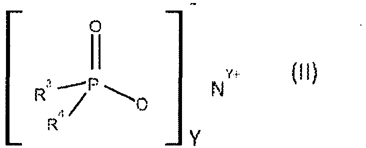 and wherein each of R¹ and R² is independently selected from the group consisting of linear C₁-C₆ alkyl groups; each of R³ and R⁴ is independently selected from the group consisting of branched C₃-C₆ alkyl groups; each of M and N is independently selected from the group consisting of magnesium ions, calcium ions, aluminum ions, zinc ions, antimony ions, tin ions, germanium ions, titanium ions, iron ions, zirconium, cerium ions, bismuth ions, strontium ions, manganese ions, lithium ions, sodium ions, potassium ions, and protonated nitrogen bases; and each of x and y is independently an integer from 1 to 4.

2. The flame-retardant polymer composition of Claim 1, wherein each of M and N is independently selected from the group consisting of aluminum ions and zinc ions.

3. The flame-retardant polymer composition of Claim 1 or Claim 2, wherein the first metal salt of phosphinic acid is selected from aluminum methylethylphosphinate and aluminum diethylphosphinate, or the first metal salt of phosphinic acid is aluminum diethylphosphinate.

4. The flame-retardant polymer composition of any one of Claims 1 to 3, wherein the second metal salt of phosphinic acid is selected from the group consisting of aluminum isopropylisobutylphosphinate, aluminum isopropyltertbutylphosphinate, and aluminum diisobutylphosphinate, or the second metal salt of phosphinic acid is aluminum diisobutylphosphinate.

5. The flame-retardant polymer composition of any one of Claims 1 to 4, wherein the mixture of metal salts of phosphinic acid is present in the composition at a level of 10-25 wt%, preferably 12-18 wt%, based on the total weight of the composition.

6. The flame-retardant polymer composition of any one of Claims 1 to 5, wherein the weight ratio between the first metal salt of phosphinic acid and the second metal salt of phosphinic acid is 2.5:1-1:2.5.

7. The flame-retardant polymer composition of any one of Claims 1 to 6, wherein the at least one polymer is selected from the group consisting of polyamides, polyesters, polyolefins, polystyrenes, polyphenylene ethers, polycarbonates, acrylonitrile-butadiene-styrene terpolymers, and combinations or blends of two or more thereof, or the at least one polymer is selected from the group consisting of polyamides and polyesters, or the at least one polymer is selected from polyamides.

8. The flame-retardant polymer composition of any one of Claims 1 to 7, wherein, the at least one polymer is present in the composition at a level of 20-89 wt%, preferably 30-80 wt%, more preferably 30-70 wt%.

9. The flame-retardant polymer composition of any one of Claims 1 to 8, wherein the at least one nitrogen-containing compound is selected from the group consisting of melamine cyanurate; condensation products of melamine; reaction products of phosphoric acid with melamine; reaction products of phosphoric acid with condensation products of melamine; and combinations of two or more thereof, or the at least one nitrogen-containing compound is melamine polyphosphate.

10. The flame-retardant polymer composition of any one of Claims 1 to 9, wherein the at least one nitrogen-containing compound is present in the composition at a level of 3-15 wt%, preferably 5-12 wt%, based on the total weight of the composition.

11. The flame-retardant polymer composition of any one of Claims 1 to 10, wherein the composition further comprises up to 60 wt%, preferably 5-50 wt% of reinforcing agents, based on the total weight of the composition.

12. The flame-retardant polymer composition of Claim 11, wherein the reinforcing agents are selected from the group consisting of glass fibers, glass flakes, kaolin, clay, talc, wollastonite, calcium carbonate, silica, carbon fibers, potassium titanate, and combinations of two or more thereof, or the reinforcing agents are selected from glass fibers.

13. An article formed of the flame-retardant composition of any one of Claims 1 to 12.

14. The article of Claim 13, which is a molded article.

## Patentansprüche

1. Flammhemmende Polymerzusammensetzung umfassend (a) mindestens ein Polymer, (b) 10-30 Gew.-% einer Mischung von Metallsalzen von Phosphinsäure und (c) 1-20 % mindestens einer stickstoffhaltigen Verbindung, wobei der Gesamtgewichtsprozentsatz aller Komponenten, die in der flammhemmenden Polymerzusammensetzung enthalten sind, insgesamt 100 Gew.-% beträgt,
wobei die Mischung von Metallsalzen von Phosphinsäure im Wesentlichen aus einem ersten Metallsalz von Phosphinsäure, das eine Formel (I) aufweist, und einem zweiten Metallsalz von Phosphinsäure, das eine Formel (II) aufweist, in einem Gewichtsverhältnis von 3:1-1:3 besteht; 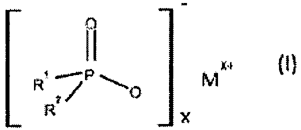 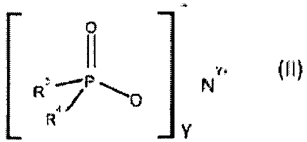 und wobei jedes von R¹ und R² unabhängig aus der Gruppe ausgewählt ist bestehend aus linearen C₁-C₆-Alkylgruppen; jedes von R³ und R⁴ unabhängig aus der Gruppe ausgewählt ist bestehend aus verzweigten C₃-C₆-Alkylgruppen; jedes von M und N unabhängig aus der Gruppe ausgewählt ist bestehend aus Magnesiumionen, Calciumionen, Aluminiumionen, Zinkionen, Antimonionen, Zinnionen, Germaniumionen, Titanionen, Eisenionen, Zirkoniumionen, Cerionen, Wismutionen, Strontiumionen, Manganionen, Lithiumionen, Natriumionen, Kaliumionen und protonierten Stickstoffbasen; und jedes von x und y unabhängig eine ganze Zahl von 1 bis 4 ist.

2. Flammhemmende Polymerzusammensetzung nach Anspruch 1, wobei jedes von M und N unabhängig aus der Gruppe ausgewählt ist bestehend aus Aluminiumionen und Zinkionen.

3. Flammhemmende Polymerzusammensetzung nach Anspruch 1 oder Anspruch 2, wobei das erste Metallsalz von Phosphinsäure unter Aluminiummethylethylphosphinat und Aluminiumdiethylphosphinat ausgewählt ist oder das erste Metallsalz von Phosphinsäure Aluminiumdiethylphosphinat ist.

4. Flammhemmende Polymerzusammensetzung nach einem der Ansprüche 1 bis 3, wobei das zweite Metallsalz von Phosphinsäure aus der Gruppe ausgewählt ist bestehend aus Aluminiumisopropylisobutylphosphinat, Aluminiumisopropyltertbutylphosphinat und Aluminiumdiisobutylphosphinat oder das zweite Metallsalz von Phosphinsäure Aluminiumdiisobutylphosphinat ist.

5. Flammhemmende Polymerzusammensetzung nach einem der Ansprüche 1 bis 4, wobei die Mischung von Metallsalzen von Phosphinsäure in der Zusammensetzung in einem Niveau von 10-25 Gew.-%, bevorzugt 12-18 Gew.-%, auf das Gesamtgewicht der Zusammensetzung bezogen, vorliegt.

6. Flammhemmende Polymerzusammensetzung nach einem der Ansprüche 1 bis 5, wobei das Gewichtsverhältnis zwischen dem ersten Metallsalz von Phosphinsäure und dem zweiten Metallsalz von Phosphinsäure 2,5:1-1:2,5 beträgt.

7. Flammhemmende Polymerzusammensetzung nach einem der Ansprüche 1 bis 6, wobei das mindestens eine Polymer aus der Gruppe ausgewählt ist bestehend aus Polyamiden, Polyestern, Polyolefinen, Polystyrolen, Polyphenylenethern, Polycarbonaten, Acrylnitril-Butadien-Styrol-Terpolymeren und Kombinationen oder Mischungen von zwei oder mehreren davon oder das mindestens eine Polymer ist aus der Gruppe ausgewählt ist bestehend aus Polyamiden und Polyestern oder das mindestens eine Polymer wird unter Polyamiden ausgewählt ist.

8. Flammhemmende Polymerzusammensetzung nach einem der Ansprüche 1 bis 7, wobei das mindestens eine Polymer in der Zusammensetzung in einem Niveau von 20-89 Gew.-%, bevorzugt 30-80 Gew.-%, noch bevorzugter 30-70 Gew.-% vorliegt.

9. Flammhemmende Polymerzusammensetzung nach einem der Ansprüche 1 bis 8, wobei die mindestens eine stickstoffhaltige Verbindung aus der Gruppe ausgewählt ist bestehend aus Melamincyanurat, Kondensationsprodukten von Melamin, Reaktionsprodukten von Phosphorsäure mit Melamin, Reaktionsprodukten von Phosphorsäure mit Kondensationsprodukten von Melamin und Kombinationen von zwei oder mehreren davon oder die mindestens eine stickstoffhaltige Verbindung Melaminpolyphosphat ist.

10. Flammhemmende Polymerzusammensetzung nach einem der Ansprüche 1 bis 9, wobei die mindestens eine stickstoffhaltige Verbindung in der Zusammensetzung in einem Niveau von 3-15 Gew.-%, bevorzugt 5-12 Gew.-%, auf das Gesamtgewicht der Zusammensetzung bezogen, vorliegt.

11. Flammhemmende Polymerzusammensetzung nach einem der Ansprüche 1 bis 10, wobei die Zusammensetzung ferner bis zu 60 Gew.-%, bevorzugt 5- 50 Gew.-% Verstärkungsmittel, auf das Gesamtgewicht der Zusammensetzung bezogen, umfasst.

12. Flammhemmende Polymerzusammensetzung nach Anspruch 11, wobei die Verstärkungsmittel aus der Gruppe ausgewählt sind bestehend aus Glasfasern, Glasflocken, Kaolin, Ton, Talkum, Wollastonit, Calciumcarbonat, Siliciumdioxid, Kohlenstofffasern, Kaliumtitanat und Kombinationen von zwei oder mehreren davon oder die Verstärkungsmittel sind aus Glasfasern ausgewählt.

13. Artikel, der aus der flammhemmenden Zusammensetzung nach einem der Ansprüche 1 bis 12 gebildet ist.

14. Artikel nach Anspruch 13, der ein geformter Artikel ist.

## Revendications

1. Composition polymère ignifuge comprenant (a) au moins un polymère, (b) de 10 à 30 % en pds d'un mélange de sels métalliques d'acide phosphinique, et (c) de 1 à 20 % d'au moins un composé contenant de l'azote, avec le % en pds total de tous les composants compris dans la composition polymère ignifuge totalisant 100 % en pds,
le mélange des sels métalliques d'acide phosphinique étant essentiellement constitué d'un premier sel métallique d'acide phosphinique ayant une formule (I) et d'un second sel métallique d'acide phosphinique ayant une formule (II) sous un rapport en poids de 3:1 à 1:3, 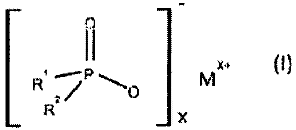 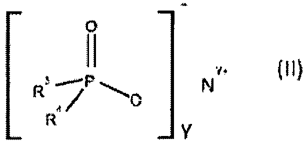 et chacun de R¹ et R² étant indépendamment sélectionné dans le groupe constitué des groupes alkyle linéaires en C₁ à C₆; chacun de R³ et R⁴ étant indépendamment sélectionné dans le groupe constitué des groupes alkyle ramifiés en C₃ à C₆; chacun de M et N étant indépendamment sélectionné dans le groupe constitué des ions de magnésium, des ions de calcium, des ions d'aluminium, des ions de zinc, des ions d'antimoine, des ions d'étain, des ions de germanium, des ions de titane, des ions de fer, du zirconium, des ions de cérium, des ions de bismuth, des ions de strontium, des ions de manganèse, des ions de lithium, des ions de sodium, des ions de potassium, et des bases protonées azotées; et chacun de x et y étant indépendamment un nombre entier d'une valeur de 1 à 4.

2. Composition polymère ignifuge selon la revendication 1, dans laquelle chacun de M et N est indépendamment sélectionné dans le groupe constitué des ions d'aluminium et des ions de zinc.

3. Composition polymère ignifuge selon la revendication 1 ou revendication 2, dans laquelle le premier sel métallique d'acide phosphinique est sélectionné parmi le méthyléthylphosphinate d'aluminium et le diéthylphosphinate d'aluminium, ou le premier sel métallique d'acide phosphinique est le diéthylphosphinate d'aluminium.

4. Composition polymère ignifuge selon l'une quelconque des revendications 1 à 3, dans laquelle le second sel métallique d'acide phosphinique est sélectionné dans le groupe constitué de l'isopropylisobutylphosphinate d'aluminium, de l'isopropyltertbutylphosphinate d'aluminium, et du diisobutylphosphinate d'aluminium, ou le second sel métallique d'acide phosphinique est le diisobutylphosphinate d'aluminium.

5. Composition polymère ignifuge selon l'une quelconque des revendications 1 à 4, dans laquelle le mélange de sels métalliques d'acide phosphinique est présent dans la composition à un niveau de 10 à 25 % en pds, préférablement de 12 à 18 % en pds, sur la base du poids total de la composition.

6. Composition polymère ignifuge selon l'une quelconque des revendications 1 à 5, dans laquelle le rapport en poids entre le premier sel métallique d'acide phosphinique et le second sel métallique d'acide phosphinique est de 2,5:1 à 1:2,5.

7. Composition polymère ignifuge selon l'une quelconque des revendications 1 à 6, dans laquelle le au moins un polymère est sélectionné dans le groupe constitué des polyamides, des polyesters, des polyoléfines, des polystyrènes, des éthers de polyphénylène, des polycarbonates, des terpolymères d'acrylonitrile-butadiène-styrène, et des combinaisons ou des mélanges de deux ou plusieurs d'entre eux, ou le au moins un polymère est sélectionné dans le groupe constitué des polyamides et des polyesters, ou le au moins un polymère est sélectionné parmi les polyamides.

8. Composition polymère ignifuge selon l'une quelconque des revendications 1 à 7, dans laquelle, le au moins un polymère est présent dans la composition à un niveau de 20 à 89 % en pds, préférablement de 30 à 80 % en pds, plus préférablement de 30 à 70 % en pds.

9. Composition polymère ignifuge selon l'une quelconque des revendications 1 à 8, dans laquelle le au moins un composé contenant de l'azote est sélectionné dans le groupe constitué du cyanurate de mélamine; des produits de condensation de la mélamine; des produits réactionnels d'acide phosphorique avec de la mélamine; des produits réactionnels d'acide phosphorique avec les produits de condensation de la mélamine; et des combinaisons de deux ou plusieurs d'entre eux, ou le au moins un composé contenant de l'azote est le polyphosphate de mélamine.

10. Composition polymère ignifuge selon l'une quelconque des revendications 1 à 9, dans laquelle le au moins un composé contenant de l'azote est présent dans la composition à un niveau de 3 à 15 % en pds, préférablement de 5 à 12 % en pds, sur la base du poids total de la composition.

11. Composition polymère ignifuge selon l'une quelconque des revendications 1 à 10, la composition comprenant en outre jusqu'à 60 % en pds, préférablement de 5 à 50 % en pds d'agents de renforcement, sur la base du poids total de la composition.

12. Composition polymère ignifuge selon la revendication 11, les agents de renforcement étant sélectionnés dans le groupe constitué des fibres de verre, des flocons de verre, du kaolin, de l'argile, du talc, de la wollastonite, du carbonate de calcium, de la silice, des fibres de carbone, du titanate de potassium, et des combinaisons de deux ou plusieurs d'entre eux, ou les agents de renforcement étant sélectionnés parmi les fibres de verre.

13. Article formé à partir de la composition ignifuge selon l'une quelconque des revendications 1 à 12.

14. Article selon la revendication 13, qui est un article moulé.
